# FASCICULE DE BREVET EUROPEEN

(11) **EP 2 780 206 B1**
(45) Date de publication et mention de la délivrance du brevet: **04.01.2017**
(21) Numéro de dépôt: 12794439.5
(22) Date de dépôt: 06.11.2012
(51) Int. Cl.: B60W 10/188, B60W 30/18, B60K 31/00, B60W 30/188, B60K 31/06

(54) **FONCTION DE CONTROLE DE LA VITESSE EN PENTE D'UN VEHICULE AUTOMOBILE**
FUNKTION ZUM STEUERN DER GESCHWINDIGKEIT EINES FAHRZEUGS AUF EINER STEIGUNG
FUNCTION FOR CONTROLLING THE SPEED OF A MOTOR VEHICLE ON A SLOPE

(30) Priorité: 15.11.2011 FR 1160362
(43) Date de publication de la demande: 24.09.2014
(73) Titulaire: Peugeot Citroën Automobiles SA, 78140 Vélizy-Villacoublay (FR)
(72) Inventeur: BLAISE, Philippe, F-25490 Dampierre Les Bois (FR); CHARPIN, Emmanuel, 25750 Desandans (FR)
(74) Mandataire: Rosenberg, Muriel Sylvie
(86) Numéro de dépôt international: PCT/FR2012/052554
(87) Numéro de publication internationale: WO 2013/072601

(56) Documents cités:
- FR-A1- 2 914 894
- US-A1- 2009 025 996
- US-A1- 2009 069 991

## Description

La présente invention concerne une fonction de contrôle de la vitesse d'un véhicule automobile sur une pente, ainsi qu'un calculateur de contrôle du freinage et un véhicule automobile mettant en oeuvre une telle fonction.

Aujourd'hui la plupart des véhicules automobiles comportent un système de freinage comprenant une fonction d'anti-blocage des roues appelée « ABS », permettant d'intervenir individuellement sur les freins de chaque roue pour éviter un blocage des roues lors de freinages importants ou de faible adhérence de la voie de circulation.

Pour les véhicules comportant une fonction de contrôle de stabilité appelée « ESP », la commande individuelle du freinage des roues est utilisée aussi pour intervenir sur la stabilité de ce véhicule, et le maintenir sur la trajectoire souhaitée par le conducteur.

Certains véhicules comportent de plus une fonction de contrôle de la vitesse du véhicule sur une pente appelée « HDC » (Hill Decsent Control), ou une fonction d'assistance pour les manoeuvres d'arrêt et de démarrage en pente appelée « HA » (Hill Assist), qui utilise la fonction de contrôle de stabilité « ESP » pour limiter la vitesse de descente du véhicule sur les fortes pentes, tout en le maintenant sur sa trajectoire.

Une fonction d'assistance complémentaire, présentée notamment par le document FR-A1-2914894, permet de gérer les situations intermédiaires entre les deux fonctions de contrôle de la vitesse du véhicule « HDC », et d'assistance pour les manoeuvres d'arrêt et de démarrage « HA ».

Toutefois la réduction de la vitesse du véhicule, dans le cas de fortes pentes en particulier, est généralement limitée par une vitesse minimum dépendant de la vitesse de rotation du moteur la plus basse admissible, et du rapport de vitesse engagé par la transmission. La vitesse du véhicule ne peut alors pas être réduite en dessous de ce seuil, qui peut être trop élevé dans certains cas comme une forte pente, un chemin sinueux à suivre ou une adhérence très faible de la voie de circulation.

La présente invention a notamment pour but d'éviter ces inconvénients de la technique antérieure, en proposant une stratégie simple et efficace permettant d'améliorer le contrôle du véhicule.

Elle propose à cet effet une fonction de contrôle de la vitesse en pente d'un véhicule automobile comportant une transmission comprenant un moyen d'ouverture de cette transmission, qui contrôle et limite automatiquement la vitesse du véhicule dans les descentes quand le conducteur relâche la pédale d'accélérateur, à une vitesse prédéterminée supérieure à un seuil minimum de vitesse donné par une valeur prédéfinie dépendant de la vitesse de rotation minimum du moteur pour éviter son calage, et du rapport de transmission engagé, caractérisée en ce que quand la transmission est au moins partiellement ouverte, le seuil minimum de vitesse est abaissé en dessous de la valeur prédéfinie.

Un avantage de la fonction de contrôle selon l'invention est que dans le cas d'une boîte manuelle, si la vitesse limitée automatiquement est trop importante et que le conducteur débraye, la fonction de contrôle peut alors réguler la vitesse du véhicule avec une valeur nettement plus basse que le seuil minimum de vitesse prédéfini dépendant de la vitesse de rotation minimum du moteur, qui est généralement compris entre 7 et 10km/h.

La fonction de contrôle de la vitesse selon l'invention peut en outre comporter une ou plusieurs des caractéristiques suivantes, qui peuvent être combinées entre elles.

Le seuil minimum de vitesse abaissé peut être constant, indépendamment de la pente de la voie de circulation.

En variante, le seuil minimum de vitesse abaissé peut dépendre de la pente de la voie de circulation.

Le seuil minimum de vitesse abaissé, peut être une fonction décroissante suivant l'augmentation de la pente de la voie de circulation.

Selon un mode de réalisation, la fonction de contrôle de la vitesse traite une information venant d'un capteur de la commande d'un embrayage de la transmission, pour détecter si la transmission est au moins partiellement ouverte.

Selon un autre mode de réalisation, la fonction de contrôle de la vitesse traite des informations venant d'un calculateur de contrôle de la transmission, pour détecter si la transmission est au moins partiellement ouverte.

Selon un autre mode de réalisation, la fonction de contrôle de la vitesse effectue des calculs à partir de données sur le fonctionnement du véhicule comme la vitesse de rotation des roues et la vitesse de rotation du moteur, pour détecter si la transmission est au moins partiellement ouverte.

L'invention a aussi pour objet un calculateur disposant d'une fonction de contrôle de stabilité « ESP », qui agit sur une fonction d'anti-blocage des roues « ABS » pour contrôler la stabilité d'un véhicule, ce calculateur comportant de plus une fonction de contrôle de la vitesse en pente comprenant l'une quelconque des caractéristiques précédentes.

L'invention a de plus pour objet un véhicule automobile disposant d'une fonction de contrôle de stabilité « ESP », qui agit sur une fonction d'antiblocage des roues « ABS » pour contrôler la stabilité, ce véhicule comportant une fonction de contrôle de la vitesse en pente comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est schéma présentant les principaux composants liés à la fonction de contrôle de la vitesse selon l'invention, pour un véhicule équipé d'une boîte de vitesses ;
- la figure 2 est un diagramme présentant les vitesses du véhicule suivant la vitesse de rotation du moteur, pour les différents rapports de la boîte de vitesses ; et
- La figure 3 est un diagramme présentant la vitesse du véhicule pilotée par des fonctions de contrôle de vitesse, suivant les pentes de la voie de circulation.

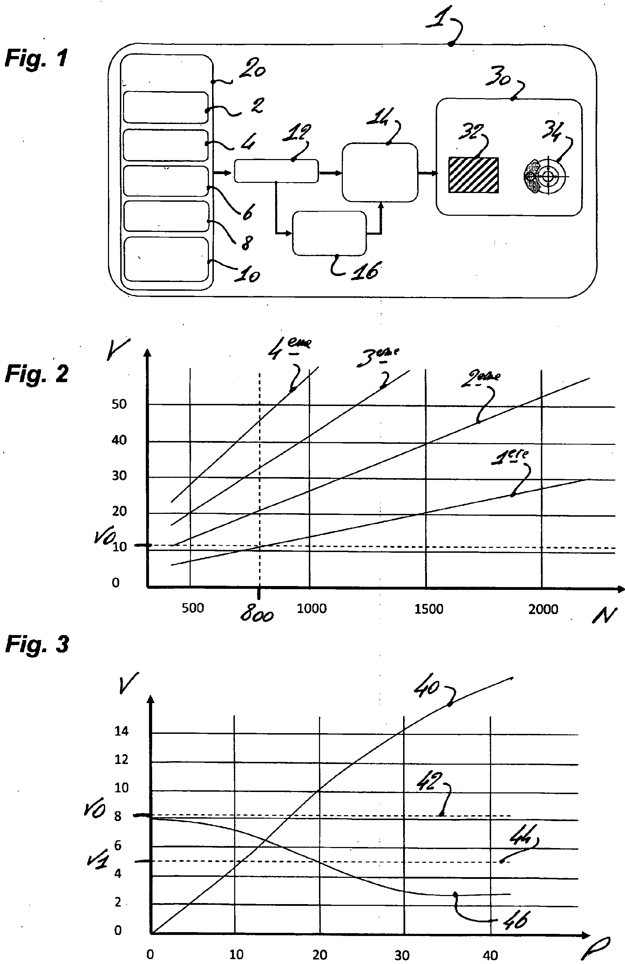

La figure 1 présente un véhicule 1 comportant une fonction d'antiblocage des roues « ABS » 14, et une fonction de contrôle de stabilité « ESP » 16, mises en oeuvre par un calculateur de contrôle de stabilité 12.

Le véhicule 1 comporte une transmission du type boîte de vitesses, comprenant un embrayage en entrée qui est actionné par une pédale d'embrayage pour les boîtes de vitesses commandées manuellement, ou par un actionneur automatique pour les boîtes de vitesses pilotées automatiques.

Le calculateur de contrôle de stabilité 12 reçoit des informations de différents capteurs 20, comprenant des capteurs de vitesse de chaque roue 2, un capteur d'angle volant 4, un capteur de position de la pédale d'accélérateur 6, un capteur d'estimation de pente 8 de la voie de circulation suivant plusieurs axes, un capteur de position de la commande d'embrayage 10 de la boîte de vitesses manuelle, ou une information réseau pour les boites de vitesses pilotées automatiques.

Le calculateur de contrôle de stabilité 12 traite les informations reçues des différents capteurs 20 pour agir sur des actionneurs de freinage 30, soit directement par la fonction d'anti-blocage des roues « ABS » 14, ou soit par l'intermédiaire de la fonction de contrôle de stabilité « ESP » 16 qui agit à son tour sur cette fonction d'anti-blocage.

Les actionneurs de freinage 30 comportent un groupe hydraulique 32 envoyant une pression hydraulique de freinage individuelle à chaque frein de roue 34, suivant une consigne de freinage adaptée pour chacune de ces roues qui est donnée par la fonction d'anti-blocage des roues « ABS » 14.

On notera que l'ensemble de ces fonctions et des composants présentés ci-dessus, hormis le capteur de la commande d'embrayage 10, sont déjà présents dans un véhicule équipé d'une fonction connue de contrôle de la vitesse du véhicule sur une pente « HDC », ou d'assistance pour les manoeuvres d'arrêt et de démarrage en pente « HA ».

Les fonctions connues de contrôle de la vitesse du véhicule sur une pente « HDC », qui sont activées par un bouton se trouvant sur le tableau de bord, limitent la vitesse de descente quand le conducteur a relâché la pédale d'accélérateur, en agissant de manière adaptée sur chaque frein de roue 34 de manière à freiner ce véhicule tout en conservant la trajectoire désirée par le conducteur.

La figure 2 présente suivant la vitesse de rotation N du moteur en tours/mn, et la vitesse engagée 1^{ère}, 2^{ème}, 3^{ème} ou 4^{ème} de la boîte de vitesses, un exemple de vitesses V du véhicule en km/h. On constate dans cet exemple que pour une vitesse de rotation N du moteur de 800tours/mn, qui est sensiblement la vitesse minimale avant le calage de ce moteur, la vitesse du véhicule V0 en 1^{ère} est de 10km/h.

En pratique la vitesse minimale V0 en 1^{ère} est généralement comprise entre 7 et 10km/h pour un véhicule de tourisme, les fonctions connues de contrôle de la vitesse du véhicule sur une pente « HDC » ne permettent donc pas de descendre une pente avec une vitesse du véhicule V inférieure tant que cet embrayage est fermé avec le rapport de vitesse engagé.

On notera que la vitesse minimale du véhicule V0 peut être nettement inférieure, par exemple de 3km/h en 1 ère, pour un véhicule tout-terrain généralement à quatre roues motrices, comprenant un réducteur de vitesse disposé en série dans la transmission, donnant une premier vitesse très démultipliée.

La figure 3 présente pour ce type de véhicule de tourisme ne comportant pas de réducteur, la vitesse du véhicule V régulée par une fonction de contrôle assisté de la vitesse du véhicule sur une pente selon l'invention, appelée aussi « HADC ».

La courbe 40 représente la vitesse du véhicule se trouvant sur une pente P exprimée en %, qui est entraîné sur cette pente par sa masse, et freiné uniquement par le frein moteur donné par la 1^{ère} vitesse qui est engagée.

La droite 42 représente la vitesse minimum du véhicule V0 régulée par la fonction de contrôle assisté de la vitesse « HADC », quand l'embrayage est fermé avec la boîte de vitesses en 1^{ère}, qui est dans cet exemple de 8km/h.

Le fonctionnement de la fonction de contrôle assisté de la vitesse « HADC » est le suivant.

Si le conducteur trouve que la vitesse du véhicule V0 est trop importante, la fonction de contrôle assisté de la vitesse « HADC » étant activée, soit il débraye pour demander une réduction de la vitesse, soit il freine pour prendre la main sur la fonction automatique, ce qui le fait sortir de cette fonction.

Pour baisser la vitesse, le capteur de la commande d'embrayage 10 ayant enregistré le débrayage, envoie alors au calculateur de contrôle de stabilité 12 un signal indiquant que la transmission est ouverte, ce qui permet à la fonction de contrôle assisté de la vitesse « HADC » d'imposer une nouvelle vitesse maximale de descente V1 inférieure à V0 indiquée par la droite 44, qui est de 5km/h dans cet exemple. La vitesse du véhicule V qui dépend de la pente P, sera alors plafonnée automatiquement à cette vitesse maximale V1.

Suivant une autre disposition, la vitesse maximale de descente peut être variable comme indiqué par la courbe 46, avec une valeur proche de 8km/h pour les faibles pentes inférieures à 10%, une valeur diminuant de manière constante de 7 à 3km/h pour une pente allant de 10 à 30%, et une valeur sensiblement stable autour de 3km/h pour les pentes supérieures à 30%.

On obtient ainsi une modulation de la vitesse V de descente qui s'adapte automatiquement à la pente, et ralentit de plus en plus le véhicule quand la pente augmente ce qui permet au conducteur de se concentrer sur la direction de ce véhicule qui garde une bonne capacité directionnelle. Cette modulation de la vitesse du véhicule V peut être conservée tant que le conducteur maintient l'embrayage ouvert, ou passe la boîte de vitesses au point mort.

En variante la transmission peut comporter une boîte de vitesses pilotée, qui commande automatiquement l'embrayage et les changements de rapports. Dans ce cas l'information sur l'embrayage ouvert peut être donnée directement par le calculateur de contrôle de cette boîte de vitesses pilotée.

D'une manière générale, la fonction de contrôle assisté de la vitesse « HADC » peut obtenir une information sur l'ouverture de la transmission, ou sur le glissement d'un organe de cette transmission comme un embrayage ou un convertisseur de couple d'une transmission automatique, par des informations venant du calculateur de contrôle de cette transmission, ou par des calculs à partir de données sur le fonctionnement du véhicule.

Elle peut notamment en comparant la vitesse de rotation du moteur N avec celles des roues motrices, données par les capteurs de vitesse de chaque roue 2, en déduire que ces vitesses ne sont plus liées par un des rapports de la transmission, et que cette transmission est partiellement ou totalement ouverte.

L'ouverture de la transmission peut aussi être donnée par une position point mort de cette transmission.

D'une manière connue, la mise en oeuvre de la fonction de contrôle assisté de la vitesse « HADC », allume les feux stop du véhicule pour prévenir du freinage un véhicule qui pourrait se trouver derrière.

La fonction de contrôle assisté de la vitesse « HADC » peut aussi suivant l'invention, de la même manière limiter la vitesse du véhicule qui descend une pente en marche arrière avec le rapport de marche arrière engagé, avec une vitesse qui est réduite quand la transmission est ouverte.

La fonction de contrôle assisté de la vitesse « HADC » peut facilement être ajoutée de manière économique sur un véhicule déjà équipé d'une fonction de contrôle de la vitesse sur une pente « HDC », avec seulement des compléments de logiciels, et dans certains cas un capteur supplémentaire sur la commande d'embrayage.

## Revendications

1. Fonction de contrôle de la vitesse en pente d'un véhicule automobile comportant une transmission comprenant un moyen d'ouverture de cette transmission, qui contrôle et limite automatiquement la vitesse du véhicule (V) dans les descentes quand le conducteur relâche la pédale d'accélérateur, à une vitesse prédéterminée supérieure à un seuil minimum de vitesse donné par une valeur prédéfinie (V0) dépendant de la vitesse de rotation minimum du moteur (N) pour éviter son calage, et du rapport de transmission engagé, **caractérisée en ce que** quand la transmission est au moins partiellement ouverte, le seuil minimum de vitesse est abaissé en dessous de la valeur prédéfinie (V0).

2. Fonction de contrôle de la vitesse selon la revendication 1, **caractérisée en ce que** le seuil minimum de vitesse abaissé est constant (V1), indépendamment de la pente (P) de la voie de circulation.

3. Fonction de contrôle de la vitesse selon la revendication 1, **caractérisée en ce que** le seuil minimum de vitesse abaissé (46) dépend de la pente (P) de la voie de circulation.

4. Fonction de contrôle de la vitesse selon la revendication 3, **caractérisée en ce que** le seuil minimum de vitesse abaissé (46) est une fonction décroissante suivant l'augmentation de la pente (P) de la voie de circulation.

5. Fonction de contrôle de la vitesse selon l'une quelconque des revendications précédentes, **caractérisée en ce qu'**elle traite une information venant d'un capteur de la commande d'un embrayage de la transmission (10), pour détecter si la transmission est au moins partiellement ouverte.

6. Fonction de contrôle de la vitesse selon l'une quelconque des revendications précédentes, **caractérisée en ce qu'**elle traite des informations venant d'un calculateur de contrôle de la transmission, pour détecter si la transmission est au moins partiellement ouverte.

7. Fonction de contrôle de la vitesse selon l'une quelconque des revendications précédentes, **caractérisée en ce qu'**elle effectue des calculs à partir de données sur le fonctionnement du véhicule comme la vitesse de rotation des roues et la vitesse de rotation du moteur (N), pour détecter si la transmission est au moins partiellement ouverte.

8. Calculateur comportant une fonction de contrôle de stabilité « ESP » (12), qui agit sur une fonction d'anti-blocage des roues « ABS » (14) pour contrôler la stabilité d'un véhicule, **caractérisé en ce qu'**il comporte de plus une fonction de contrôle de la vitesse en pente « HADC » réalisée selon l'une quelconque des revendications précédentes.

9. Véhicule automobile disposant d'une fonction de contrôle de stabilité « ESP » (12), qui agit sur une fonction d'anti-blocage des roues « ABS » (14) pour contrôler la stabilité de ce véhicule, **caractérisé en ce qu'**il comporte de plus une fonction de contrôle de la vitesse en pente « HADC » réalisée selon l'une quelconque des revendications 1 à 7.

## Patentansprüche

1. Funktion zum Steuern der Geschwindigkeit beim Bergabfahren eines Kraftfahrzeugs, das ein Getriebe umfasst, das ein Mittel zum Öffnen dieses Getriebes umfasst, das automatisch die Geschwindigkeit des Fahrzeugs (V) beim Bergabfahren, wenn der Fahrer das Gaspedal freigibt, auf eine vorbestimmte Geschwindigkeit steuert und begrenzt, die größer ist als ein Mindest-Geschwindigkeitsschwellenwert, der von einem vordefinierten Wert (V0) gegeben wird, der von der Mindestdrehzahl des Motors (N), um dessen Abwürgen zu vermeiden, und vom eingerückten Gang abhängt, **dadurch gekennzeichnet, dass**, wenn das Getriebe mindestens teilweise offen ist, der Mindestgeschwindigkeitsschwellenwert unter den vordefinierten Wert (V0) gesenkt wird.

2. Funktion zum Steuern der Geschwindigkeit nach Anspruch 1, **dadurch gekennzeichnet, dass** der gesenkte Mindestgeschwindigkeitsschwellenwert (V1) unabhängig von dem Gefälle (P) des Verkehrswegs konstant ist.

3. Funktion zum Steuern der Geschwindigkeit nach Anspruch 1, **dadurch gekennzeichnet, dass** der gesenkte Mindestgeschwindigkeitsschwellenwert (46) von dem Gefälle (P) des Verkehrswegs abhängt.

4. Funktion zum Steuern der Geschwindigkeit nach Anspruch 3, **dadurch gekennzeichnet, dass** der Mindestgeschwindigkeitsschwellenwert (46) eine sinkende Funktion in Abhängigkeit von der Erhöhung des Gefälles (P) des Verkehrswegs ist.

5. Funktion zum Steuern der Geschwindigkeit nach einem der vorhergehenden Ansprüche, **dadurch gekennzeichnet, dass** sie eine Information verarbeitet, die von einem Fühler der Steuerung einer Kupplung des Getriebes (10) kommt, um zu erfassen, ob das Getriebe wenigstens teilweise offen ist.

6. Funktion zum Steuern der Geschwindigkeit nach einem der vorhergehenden Ansprüche, **dadurch gekennzeichnet, dass** sie Informationen verarbeitet, die von einem Steuerrechner des Getriebes kommen, um zu erfassen, ob das Getriebe mindestens teilweise offen ist.

7. Funktion zum Steuern der Geschwindigkeit nach einem der vorhergehenden Ansprüche, **dadurch gekennzeichnet, dass** sie Berechnungen ausgehend von Daten über das Funktionieren des Fahrzeugs, wie zum Beispiel der Drehzahl der Räder und der Drehzahl des Motors (N) ausführt, um zu bestimmen, ob das Getriebe mindestens teilweise offen ist.

8. Rechner, der eine Funktion zum Steuern der Stabilität "ESP" (12) umfasst, die auf eine Antiblockierfunktion der Räder "ABS" (14) einwirkt, um die Stabilität eines Fahrzeugs zu prüfen, **dadurch gekennzeichnet, dass** er außerdem eine Funktion zum Steuern der Geschwindigkeit beim Bergabfahren "HADC" umfasst, die nach einem der vorhergehenden Ansprüche hergestellt ist.

9. Kraftfahrzeug, das über eine Stabilitätssteuerfunktion "ESP" (12) verfügt, die auf eine Antiblockierfunktion der Räder "ABS" (14) einwirkt, um die Stabilität dieses Fahrzeugs zu steuern, **dadurch gekennzeichnet, dass** es außerdem eine Funktion zum Steuern der Geschwindigkeit beim Bergabfahren "HADC" umfasst, die nach einem der Ansprüche 1 bis 7 ausgeführt ist.

## Claims

1. A function for controlling the speed, on a slope, of a motor vehicle, comprising a transmission including a means of disengaging this transmission, which controls and automatically limits the speed of the vehicle (V) progressing downhill when the driver releases the accelerator pedal, to a predetermined speed that is higher than a minimum speed threshold given by a predefined value (V0) dependent on the minimum speed at which the engine (N) has to turn over in order to prevent it from stalling, and on the transmission ratio engaged, **characterized in that** when the transmission is at least partially disengaged, the minimum speed threshold is dropped below the predefined value (V0).

2. The function for controlling the speed according to claim 1, **characterized in that** the minimum dropped speed threshold is constant (V1), independently of the slope (P) of the highway.

3. The function for controlling the speed according to claim 1, **characterized in that** the minimum dropped speed threshold (46) depends on the slope (P) of the highway.

4. The function for controlling the speed according to claim 3, **characterized in that** the minimum dropped speed threshold (46) is a decreasing function according to the increase of the slope (P) of the highway.

5. The function for controlling the speed according to any one of the preceding claims, **characterized in that** it processes data originating from a sensor of the control of a clutch of the transmission (10), to detect if the transmission is at least partially disengaged.

6. The function for controlling the speed according to any one of the preceding claims, **characterized in that** it processes data originating from a control computer of the transmission, to detect if the transmission is at least partially disengaged.

7. The function for controlling the speed according to any one of the preceding claims, **characterized in that** it carries out calculations from data on the functioning of the vehicle such as the rotation speed of the wheels and the rotation speed of the engine (N), to detect if the transmission is at least partially disengaged.

8. A computer comprising an "ESP" stability control function (12), which acts on an "ABS" anti-lock braking function of the wheels (14) to control the stability of a vehicle, **characterized in that** it comprises in addition an "HADC" function for controlling the speed on a slope, realized according to any one of the preceding claims.

9. A motor vehicle having an "ESP" stability control function (12), which acts on an "ABS" anti-lock braking function of the wheels (14) to control the stability of this vehicle, **characterized in that** it comprises in addition an "HADC" function for controlling the speed on a slope, realized according to any one of claims 1 to 7.
